(19) Europäisches Patentamt / European Patent Office / Office européen des brevets

(11) **EP 3 195 487 B1**

(12) **EUROPEAN PATENT SPECIFICATION**

(45) Date of publication and mention
of the grant of the patent:
**06.03.2019 Bulletin 2019/10**

(51) Int Cl.:
***H04B 1/7163*** (2011.01)    ***G01S 5/02*** (2010.01)

(21) Application number: **14795648.6**

(22) Date of filing: **10.11.2014**

(86) International application number:
**PCT/EP2014/074169**

(87) International publication number:
**WO 2016/023600 (18.02.2016 Gazette 2016/07)**

(54) **A RECEIVER FOR USE IN AN ULTRA-WIDEBAND COMMUNICATION SYSTEM**

EMPFÄNGER ZUR VERWENDUNG IN EINEM ULTRABREITBAND-KOMMUNIKATIONSSYSTEM

RÉCEPTEUR DESTINÉ À ÊTRE UTILISÉ DANS UN SYSTÈME DE COMMUNICATION À ULTRA LARGE BANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.08.2014 US 201462037020 P**

(43) Date of publication of application:
**26.07.2017 Bulletin 2017/30**

(73) Proprietor: **Decawave Ltd.**
**Dublin 8 (IE)**

(72) Inventors:
• **MCLAUGHLIN, Michael**
**Dublin 18 (IE)**
• **VERSO, Billy**
**Maynooth**
**County Kildare (IE)**
• **PROUDFOOT, Tony**
**Bray**
**Co Wicklow (IE)**

(74) Representative: **Hirsz, Christopher Stanislaw et al**
**Mathys & Squire LLP**
**The Shard**
**32 London Bridge Street**
**London SE1 9SG (GB)**

(56) References cited:
**WO-A1-2009/143559      US-A1- 2013 163 638**

• **SAHINOGLU Z ET AL: "Threshold-Based TOA
Estimation for Impulse Radio UWB Systems",
ULTRA-WIDEBAND, 2005 IEEE INTERNATIONAL
CONFERENCE ON ZURICH, SWITZERLAND
05-08 SEPT. 2005, PISCATAWAY, NJ, USA,IEEE,
5 September 2005 (2005-09-05), pages 420-425,
XP010873336, DOI: 10.1109/ICU.2005.1570024
ISBN: 978-0-7803-9397-4**
• **ANDREA GIORGETTI ET AL: "Time-of-Arrival
Estimation Based on Information Theoretic
Criteria", IEEE TRANSACTIONS ON SIGNAL
PROCESSING, IEEE SERVICE CENTER, NEW
YORK, NY, US, vol. 61, no. 8, 1 April 2013
(2013-04-01), pages 1869-1879, XP011497795,
ISSN: 1053-587X, DOI:
10.1109/TSP.2013.2239643**

**Description**

CROSS-REFERENCE TO RELATED APPLICATIONS

This application is a Continuation-In-Part of Application Serial No. 14/290,956, filed 29 May 2014 (*"Parent Application"*).
The Parent Application is, in turn, a Division of Application Serial No. 13/775,282, filed 25 February 2013, now U.S. Patent No. 8,760,334, issued 24 June 2014 (*"First Parent Patent"*). Related Application One is, in turn, a Continuation-In-Part of Application Serial No. 13/033,098, filed 23 February 2011, now U.S. Patent No. 8,436,758, issued 7 May 2013 (*"Second Parent Patent"*), which is in turn related to Provisional Application Serial No. 61/316,299, filed 22 March 2010 (*"First Parent Provisional"*).
Related Application One is also, in turn, a Continuation-In-Part of Application Serial No. 12/885,517, filed 19 September 2010, now U.S. Patent No. 8,437,432, issued 7 May 2013 (*"Third Parent Patent"*), which is also in turn related to the First Parent Provisional.
This application is also related to Provisional Application Serial No. 62/037,020, filed 13 August 2014 (*"Second Parent Provisional"*).
The subject matter of this Application is also related to the subject matter of PCT Application Serial No. PCT/GB2014/052677, filed 4 September 2014 (*"Related Application"*).
This application claims priority to:

1. The Parent Application;

2. The First, Second and Third Parent Patents;

3. The First and Second Parent Provisionals; and

4. The Related Application;

collectively, *"Related References",* and hereby claims benefit of the filing dates thereof pursuant to 37 CFR §1.78(a)(4).

BACKGROUND OF THE INVENTION

1. Field of the Invention.

The present invention relates generally to ultra-wideband communication systems, and, in particular, to a receiver for use in an ultra-wideband communication system.

2. Description of the Related Art.

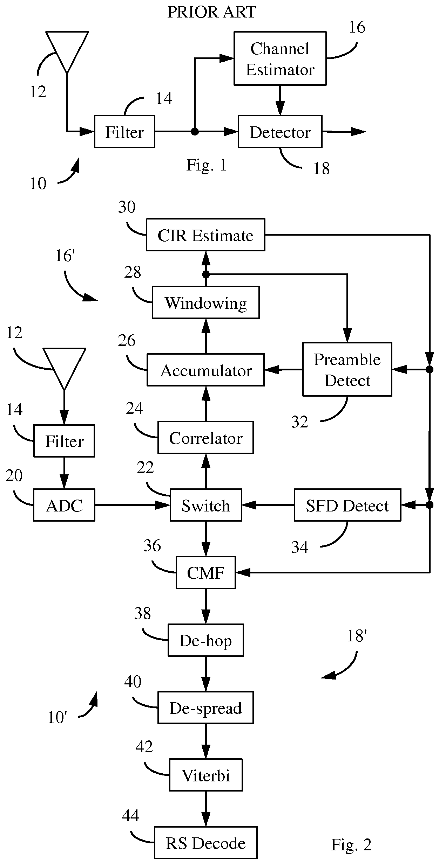

In general, in the descriptions that follow, we will *italicize* the first occurrence of each special term of art which should be familiar to those skilled in the art of *ultra-wideband* ("*UWB*") communication systems. In addition, when we first introduce a term that we believe to be new or that we will use in a context that we believe to be new, we will **bold** the term and provide the definition that we intend to apply to that term. In addition, throughout this description, we will sometimes use the terms *assert* and *negate* when referring to the rendering of a signal, signal flag, status bit, or similar apparatus into its logically true or logically false state, respectively, and the term *toggle* to indicate the logical inversion of a signal from one logical state to the other. Alternatively, we may refer to the mutually exclusive *boolean* states as logic_0 and logic_1. Of course, as is well known, consistent system operation can be obtained by reversing the logic sense of all such signals, such that signals described herein as logically true become logically false and *vice versa.* Furthermore, it is of no relevance in such systems which specific voltage levels are selected to represent each of the logic states.
In general, in an ultra-wideband ("UWB") communication system, a series of special processing steps are performed by a UWB *transmitter* to prepare *payload data* for transmission via a *packet-based* UWB *channel.* Upon reception, a corresponding series of reversing steps are performed by a UWB *receiver* to recover the data payload. Details of both series of processing steps are fully described in *IEEE Standards 802.15.4* (*"802.15.4"*) and *802.15.4a* (*"802.15.4a"*), As is known, these Standards describe required functions of both the transmit and receive portions of the system, but specify implementation details only of the transmit portion of the system, leaving to implementers the choice of how to implement the receive portion.
One particular problem in *multi-path, spread-spectrum* systems, including UWB, is *channel-induced noise* present in the received signal. One common technique for significantly reducing the noise level relative to the receive level is to develop, during reception of a *training sequence* portion of the *preamble* of each transmitted packet, an estimate of the *channel impulse response* (*"CIR"*). As is known, each CIR estimate comprises a set of *coefficients* representing the impulse response of the channel. Following detection in the received packet of the *start-of-frame delimiter* (*"SFD"*), the best CIR estimate is reversed in time and the *complex conjugate* is developed. This *conjugate CIR estimate* is thereafter *convolved* with the payload portion of the packet using a *channel matched filter* (*"CMF"*). Shown in Fig. 1 is a UWB receiver 10 adapted to operate in this manner. As is known, the signal received via an antenna 12 is continuously *conditioned* by a filter 14. During reception of the training sequence, channel estimator 16 develops from the conditioned signal the conjugate CIR estimate. During reception of the payload data, detector 18 employs a CMF (not shown) to convolve the conditioned signal with the conjugate CIR estimate, thereby significantly improving the *signal-to-noise ratio* (*"SNR"*) and facilitating recovery of the payload data. See, also, "Efficient Back-End Channel Matched Filter (CMF)", US 7,349,461, issued 25 March 2008.

As noted in 802.15.4a, §5.5.7.1, "UWB devices that have implemented optional ranging support are called *ranging-capable devices* (RDEVs)." (Emphasis in original.) For certain applications, such RDEVs are commonly implemented in the form of a relatively compact, autonomous *radio-frequency identification* (*"RFID"*) tag or the like. Due to the small form factor and limited power supply, it is especially important to select circuit implementations that provide maximum performance at minimum power. Unfortunately, in known implementations of the UWB receiver, improvements in performance usually come at the expense of power. For example, it is known that a *rake filter* provides good performance in multi-path, spread-spectrum systems such as UWB. See, *e.g.,* slide 21 of "The ParthusCeva Ultra Wideband PHY Proposal", IEEE P802.15 Working Group for Wireless Personal Area Networks, March 2003. However, known rake filter implementations tend to consume significantly more power than other prior art techniques.

While it has been proposed to implement the *front-end* of a spread-spectrum receiver using a fast, 1-bit *analog-to-data converter* (*"ADC"*) to reduce the size (in terms of transistor count) of the convolution logic in both the CIR estimator and the CMF, such implementations are known to be particularly sensitive to *continuous-wave* ("CW") interference. This CW interference can be substantially *rejected* using a full 2-bit, *sign+magnitude* implementation such as that described by F. Amoroso in "Adaptive A/D Converter to Suppress CW Interference in DSPN Spread-Spectrum Communications", IEEE Trans. on Communications, vol. COM-31, No. 10, October 1983, pp. 1117-1123 (*"Amoroso83"*). However, in such implementations, having dual representations of the 0-state, *i.e.,* [-0, +0], tend to increase system entropy, resulting in less-than-optimal circuit/power efficiency.

As is known, 802.15.4a provides for a precision ranging capability. As is also known, distinguishing the different multipath components that compose a received UWB signal is often difficult yet necessary for accurate ranging estimates. Noise, multipath components, obstacles, interference and clock drift may affect received UWB signals. In dense multipath channels, it is often challenging to distinguish the *first path, i.e.,* the most direct path by which transmitted energy first arrives at the receiver 10'.

SAHINOGLU Z ET AL "Threshold-Based TOA Estimation for Impulse Radio UWB Systems", ULTRA-WIDEBAND, 2005 IEEE, SWITZERLAND, ISBN: 978-0-7803-9397-4, describes time of arrival estimation in UWB. Statistics relating to the received signal are used to set a threshold. The first path exceeding the threshold is used to set a search-back window for further testing of samples prior to the first path.

WO2009/143559 A1 describes how noise estimated from a noise-only region preceding a leading edge of the received UWB signal is used to set a threshold. Leading edge is taken as the first peak exceeding the threshold. Interpolation is performed on a window of coefficients prior to and including the leading edge. The resulting peak position is taken as the first path.

We submit that what is needed is an improved method and apparatus for use in the receiver of a UWB communication system to determine the first path. In particular, we submit that such a method and apparatus should provide performance generally comparable to the best prior art techniques while requiring less circuitry and consuming less power than known implementations of such prior art techniques.

BRIEF SUMMARY OF THE INVENTION

In accordance with a preferred embodiment of our invention, we provide in one embodiment a method for use in an ultra-wideband (UWB) communication system in which multi-symbol packets are transmitted via a transmission channel, the method comprising the steps as set out in independent claim 1. Further embodiments are provided in the dependent claims.

In one other embodiment, our method is practiced in a receiver specially adapted for use in a UWB communication system.

In another embodiment, our method is embodied, in whole or in part, in a non-transient computer readable medium including executable instructions which, when executed by a computer specially adapted for use in a UWB communication system, cause the computer to perform our method.

We submit that each of these embodiments of our invention determine the first path as effectively as any prior art method or apparatus now known to us, while consuming less power.

BRIEF DESCRIPTION OF THE SEVERAL VIEWS OF THE DRAWINGS

Our invention may be more fully understood by a description of certain preferred embodiments in conjunction with the attached drawings in which:

Fig. 1 illustrates, in block diagram form, a prior art receiver adapted for use in a UWB communication system;

Fig. 2 illustrates, in block diagram form, one embodiment of the receiver shown in Fig. 1, but constructed in accordance with our invention;

Fig. 3 illustrates, in flow diagram form, operation of the correlator block shown in Fig. 2;

Fig. 4, comprising Fig. 4a, Fig. 4b, and Fig. 4c, illustrates, in flow diagram form, a method of determining the first path of a received signal using the receiver 10';

Fig. 5 illustrates, as a waveform, exemplary accumulator data resident in the accumulator 26;

Fig. 6 illustrates, as a waveform, a zoomed-in view of the exemplary accumulator data illustrated in Fig. 5;

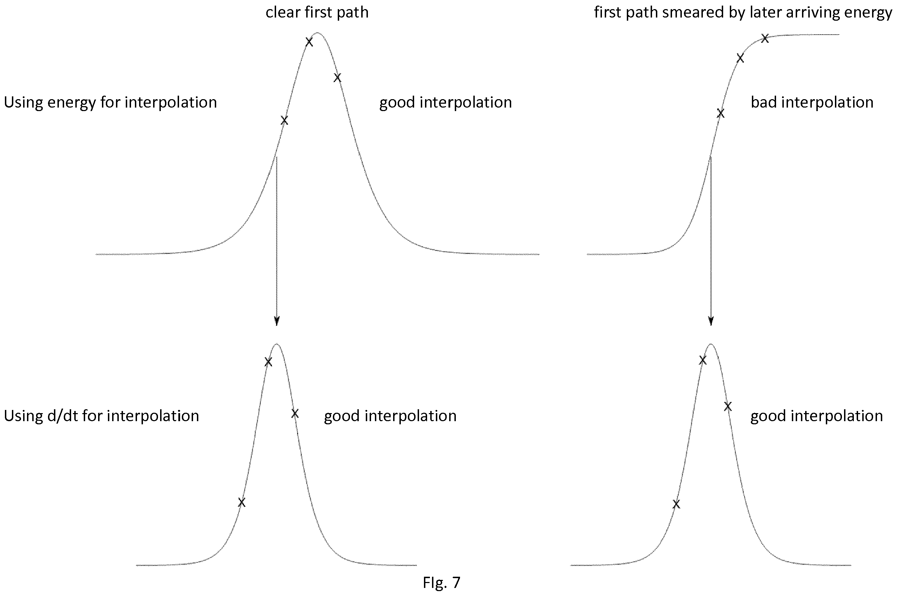

Fig. 7 illustrates, as contrasting waveforms, the effects of later arriving energy corrupting the first path energy; and

Fig. 8 illustrates, in graphical form, the triangular interpolation of the estimates of the slope of the first arriving energy in accordance with our invention.

In the drawings, similar elements will be similarly numbered whenever possible. However, this practice is simply for convenience of reference and to avoid unnecessary proliferation of numbers, and is not intended to imply or suggest that our invention requires identity in either function or structure in the several embodiments.

DETAILED DESCRIPTION OF THE INVENTION

Shown in Fig. 2 is a UWB receiver 10' constructed in accordance with our invention. As in the prior art system shown in Fig. 1, the signal received by antenna 12 is continuously conditioned by filter 14. The conditioned signal is then periodically sampled by an analog-to-digital converter ("ADC") 20 and provided as a continuous series of *digital* samples. In accordance with a preferred embodiment of our invention, ADC 20 is specially adapted to provide each digital sample in *ternary* form, *i.e.,* [-1, 0, +1]. In view of the difficulty of currently available standard digital circuit technology efficiently to represent a 3-value variable in the form of a single ternary **trit,** we anticipate, at least in the near term, such variables will require representation using 2 conventional, binary *bits,* wherein a first one of the bits represents the *numeric* component of the variable, *i.e.,* [0, 1], and the second bit represents the *sign* of the variable, *i.e.,* [+, -]. In this regard, it could be argued that circuit technology has not progressed all that much since Soviet researchers built the first (perhaps only?) documented ternary-based computer systems. See, *"A Visit to Computation Centers in the Soviet Union,"* Comm. of the ACM, 1959, pp. 8-20; and *"Soviet Computer Technology - 1959",* Comm. of the ACM, 1960, pp. 131-166.

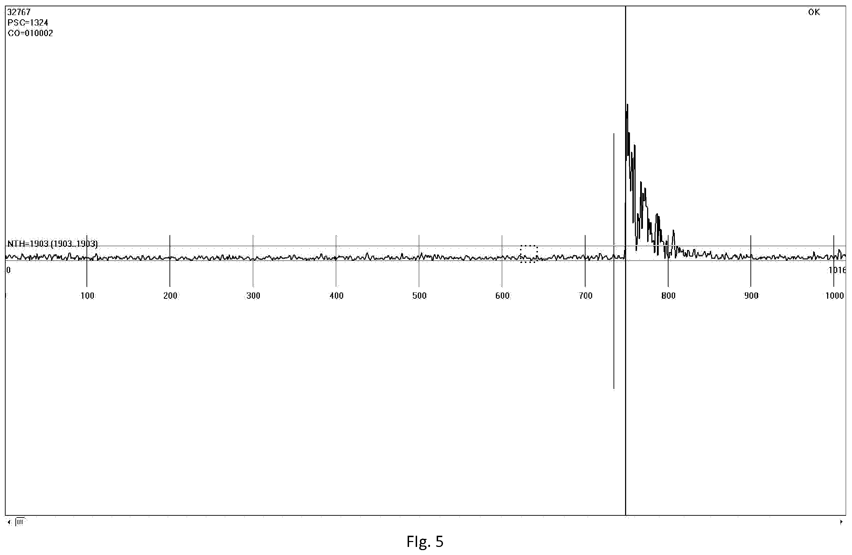

In the context of our invention, our trit can be distinguished from a conventional sign+magnitude implementation such as that described in Amoroso83, cited above. Consider the strategy for A/D conversion shown in Fig. 5 of Amoroso83; and, note, especially, that there are three separate and distinct *switching thresholds:* (i) a *sign threshold* [$T_0$]; (ii) a *positive magnitude threshold* [$T_0 + \Delta$]; and (iii) a *negative magnitude threshold* [$T_0 - \Delta$]. (See, also, Amoroso83, p. 1119, lines 21-24.) We have discovered that adapting the ADC to use ONLY a positive magnitude threshold [$T_0 + \Delta$] and a negative magnitude threshold [$T_0 - \Delta$] results in only a very small loss in resolution, while improving the performance of an impulse radio UWB receiver. Accordingly, in our preferred embodiment, ADC 20 implements only positive/negative magnitude thresholds [$T_0 \pm \Delta$], thereby simplifying the circuit while simultaneously improving both the *conversion time* of the ADC 20 and, in general, the performance of the receiver. Such an implementation lends itself naturally to our trit-based scheme, wherein the three defined states indicate, for example, that:

[-1] => the input is below the negative magnitude threshold [$T_0 - \Delta$];
[0] => the input is between the negative magnitude threshold [$T_0 - \Delta$] and the positive magnitude threshold [$T_0 + \Delta$]; and
[+1] => the input is above the positive magnitude threshold [$T_0 + \Delta$].

In contrast to a conventional sign+magnitude implementation, our trit-based ADC 20 can be readily adapted to operate either at a higher sample rate (improved performance but with more power) or at an equivalent sample rate (substantially equivalent performance but with less complexity, thereby reducing both circuit size and power consumption).

Upon *power-on,* a switch 22 will be configured to direct the trit sample stream to a correlator 24 portion of channel estimator 16'. In one embodiment, correlator 24 is adapted to correlate the sample stream with the known training sequence, and periodically to provide a partial *finite impulse response* ("*FIR*") for each symbol. An accumulator 26 is provided to accumulate the partial FIRs on a per-symbol basis for some or all of the symbols comprising the *synchronization header* ("*SHR*").

Windowing 28 is provided to selectively develop a CIR estimate based on a selected, sliding subset, *i.e., window,* of the accumulated per-symbol FIRs. When a sufficient number of per-symbol FIRs have been accumulated, windowing 28 develops an initial CIR estimate 30. In one embodiment, windowing 28 is adapted thereafter to periodically develop new CIR estimates as symbols slide through the window.

A preamble detect 32 correlates each new CIR estimate with the CIR estimate 30. In the event that preamble detect 32 determines that the new CIR estimate sufficiently **resembles** CIR estimate 30, then preamble detect 32 signals that the preamble has been detected. If, however, the new CIR estimate does not sufficiently resemble the CIR estimate 30, preamble detect 32 stores the new CIR estimate as CIR estimate 30. In one embodiment, preamble detect 32 is adapted to reset accumulator 26 each time a new CIR estimate 30 is stored, thereby facilitating development of the CIR estimate 30 using only trit samples from selected portions of the preamble of the received packet.

As is known, the predefined SFD code comprises a predetermined set of $N_{SFD}$ symbols. Once a predetermined minimum number of symbols have been received and continuing for each subsequent preamble symbol, an SFD detect 34 correlates the SFD detection code with the accumulated FIRs of the $N_{SFD}$ most recently received symbols. In one embodiment, SFD detect 34 is adapted to configure switch 22 so as to direct the trit sample stream to a CMF 36 portion of detector 18' when the SFD detection correlation exceeds a selected threshold, indicating that the full SHR has been received and the PHY header is immediately to follow.

In accordance with our invention, the CIR estimate 30 as of the moment of SFD detection comprises the best estimate of the impulse response of the channel. In one embodiment, windowing 28 is adapted to provide an index indicative of the portion of accumulator 26 upon which the final CIR estimate 30 was based. In effect, the index indicates the portion of the accumulator containing the most energy, which, in most cases, also contains the path with the highest energy, *i.e.,* the *peak path.* In a ranging application, the portion of accumulator 26 immediately preceding the index can be analyzed, *e.g.,* using interpolation, to identify the *direct path.*

In one embodiment, CMF 36 is adapted to correlate the received trit sample stream with the final, *i.e.,* best, CIR estimate 30, thereby filtering the CIR noise from the sample stream. The filtered sample stream is then processed in a known manner by De-hop 38, De-spread 40, Viterbi 42 and *Reed-Solomon* ("*RS*") decode 44 to recover the data payload.

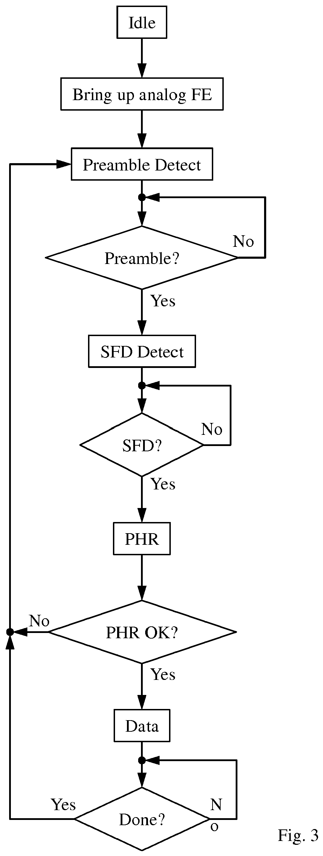

Fig. 3 illustrates, in flow diagram form, the general method of operation of the UWB receiver 10' illustrated in Fig. 2 as described above. Details of the construction and operation of the UWB receiver 10' can be found in the Related References.

As explained above and in the Related References, our accumulator 26 develops a complex estimate of the CIR by accumulating repeated ternary complex correlations of the sampled stream with a known training sequence. As is known, the CIR estimate is circular, *i.e.,* there is no way to tell where the start is and where the end is. We have assumed that the energy will on average die away more and more towards the end of the actual CIR, so, to try to find the end, we perform a search for a point of minimum energy. We then assume that the start comes after this end. When receiving the signal, we do a *time shift* so that the highest energy portion of the accumulator 26 ends up at the *window index* which we have chosen to be around ¾ of the way along the accumulator. From this point on, the energy will decrease, but, for a long channel, it will wrap around to the start of the CIR. For this reason, we choose to ignore the start of the CIR estimate when looking for the *silent* period that precedes the first arriving energy in the CIR estimate. For the purpose of our calculation, we shall refer to the number of coefficients that we ignore at the start of the CIR estimate as *ignoreUpto;* and we shall refer to the length of the section of noise for which we are looking as *noiseLength.* Thus, we calculate the energy of a window of CIR coefficients at a given index, i, in the accumulator as follows:

$$[\text{Eq. 1}]\ Energy(i) = Energy(i-1) + alpha * \big(mag(I + jQ) - Energy(i-1)\big)$$

To find the minimum value of *Energy(i),* we search indices between (*noiseLength*+1+*ignoreUpTo*) and *windowIndex,* and, when found, we consider *i* to be the start of the noise region. The several parameters are programmable, and, by way of example, may be as follows:

$$alpha = 1/64;$$

$$noiseLength = 128;$$

and

$$ignoreUpTo = 200$$

Now, we calculate the complex mean of the selected noise region, treating the quadrature estimate of the CIR resident in the accumulator 26 as a sequence of complex numbers. For convenience, we assume that the complex numbers in the noise region have a *Gaussian* distribution. However, noting that this distribution may have a non-zero mean due to carrier frequency offset, we calculate the complex mean of the CIR over the noise region by summing over, and then dividing by, the *noiseLength.* By subtracting the complex mean of the noise region from the sequence of complex values in accumulator 26 comprising the CIR estimate, we may thus treat as Gaussian variables all subsequent complex values from the noise region.

We can now calculate the magnitude of the complex values of the CIR estimate, by a well known approximation:

$$[Eq.2]\ magnitude = \max(abs(I), abs(Q)) + (1/4 * \min(abs(I), abs(Q)))$$

These magnitudes provide an energy delay profile of the channel, and, in the noise region, the magnitude can be considered to be a Rayleigh distributed variable.

Next, we calculate the statistics of the magnitudes of the noise region:

the mean is calculated as:

$$[Eq.\ 3]\ u = \frac{\sum mag\_i}{noiseLength}$$

the standard deviation is calculated as:

$$StdDev = \sqrt{\frac{\sum (u - mag\_i)^2}{noiseLength}}$$

$$[Eq.\ 4]$$

the peak value is found as:

$$[Eq.\ 5]\ PeakVal = \max(mag\_i);$$

where:
*mag_i* = the sequence of magnitudes of the noise region.

In order to find the leading edge of the energy profile of the CIR, we must calculate a suitable threshold. Starting a search at noiseStart and going forward, we use the first energy value to exceed this threshold as the first path index. We develop this threshold as follows:

$$[Eq.\ 6]\ firstPathThreshold = \max(peakThreshold, nStdThreshold)$$

where:

$$peakThreshold = peakMultiplier * peakValue$$

$$nStdThreshold = u + nStd * StdDev$$

$$peakMultiplier = 1.5;$$

and

$$nStd = \text{a multiplier.}$$

The quiet section has noise with a standard deviation of, say, *Y*. We know, therefore, that there are quite a few values that exceed this standard deviation, and even some by quite a large amount. By trial and error, we have found that this multiplier needs to be 7, 8, 9, 10, 11, 12 or even 13, depending on the expected environment, to reduce the likelihood of excessive noise triggering the first path search.

Having established a suitable noise threshold, *i.e., firstPathThreshold,* we perform a search of the magnitude data, beginning at *noiseStart,* and going forward in time, *i.e.,* along the x-axis of a plot of the magnitude data. The x-value corresponding to the first energy value, *i.e.,* the first of the prior computed magnitude values of the CIR, to exceed *firstPathThreshold* we select to be the *first path index.* Beginning with this first path index, we capture: the 3 values of magnitudes of the CIR estimate preceding the value at the index; the value at the index; and the 4 values after the value at the index-*i.e.*, a total of 8 values comprising a window surrounding the first path index.

As we have noted above, later arriving energy associated with multipath components, noise, and interference may corrupt or smear the first path energy. Instead of the more usual method of interpolating the magnitude of the CIR estimate to find the peak of the first path in the CIR energy, we have discovered that we can achieve better results by interpolating to find the point of *maximum rate of change* of the leading edge of the impulse response by finding the *peak of the slope of the first path* in the CIR energy, *i.e.,* the peak of the first *derivative.* We submit that our approach, *i.e.,* interpolating to find the peak of the slope, substantially avoids the problem of later arriving energy smearing the first path energy.

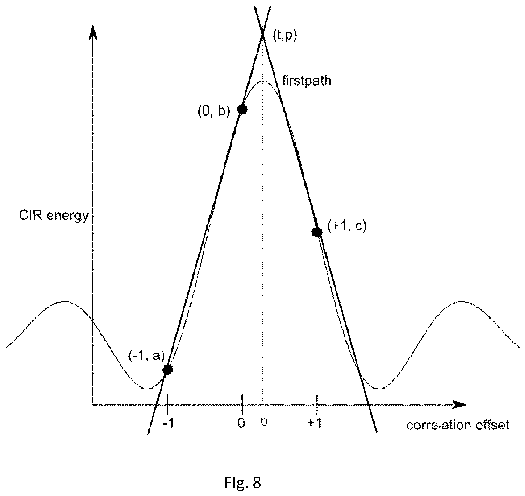

We now compute the differences between these eight discrete magnitudes to give us seven (7) estimates of the slope of the first arriving energy. These 7 estimates comprise a subset of three (3) points that fit a triangle shape. By way of example, Fig. 8 illustrates the triangular interpolation of one sample set of estimates in a manner substantially similar to the following *pseudo-code* algorithm:

```
function pathPosition = ldeMatch(accumulator,index)
%
% feature match accumulator and return first path position
% get differences near the first to cross the threshold
%
accDiffs = diff(mag(accumulator(index-3:index+4)));
di = 4;
threeTaps = (accDiffs(3:5));
if accDiffs(3) > accDiffs(4) % if slope already negative
{
   di=3; % go back one
   threeTaps = (accDiffs(2:4));
   if accDiffs(2)>accDiffs(3) % if still not a triangle
    {
       di=2; % go back one more
       threeTaps = (accDiffs(1:3));
    }
}
else if accDiffs(5) > accDiffs(4) % if next one is a peak
{
   if accDiffs(5) > accDiffs(6)
    {
       di=5; % go forward one
       threeTaps = (accDiffs(di-1:di+1));
```

```
        }
     else if accDiffs(6) > accDiffs(5) % if four taps increasing
     {
        if accDiffs(7) > accDiffs(6) % if all 5 taps increasing
        {
           threeTaps = [0 1 1];
           warning('5 increasing differences in a row');
        }
        else
        {
           threeTaps = (accDiffs(di+1:di+3));
        }
        di=6;
     }
   }
  }
```

In the foregoing pseudo-code algorithm, we *feature match* by identifying a window of three (3) consecutive estimates wherein the first, *a,* and third, *c*, estimates are lower than the second, *b*, estimate. As illustrated in Fig. 8, we can use these three ($x$, $y$) points, *i.e.,* [(-1, *a*) (0, *b*) (+1, *c*)], to calculate the apex ($t$, $p$) of an isosceles triangle, where:

*t* is the interpolated peak magnitude of the first path of the CIR estimate; and

*p* is an interpolated offset between -0.5 and 0.5 samples, calculated as:

$$[\text{Eq. } 7] \quad p = \frac{1}{2} * \frac{c - a}{b - \min(a,c)}$$

where: min($a$,$c$) is a function that finds the smaller of the two magnitudes *a* and *c*.

In the illustrated example, the actual correlation offset of point (0, *b*) of the three energy points chosen for triangular interpolation represents the index of the first path to a resolution of 499.2 x 2 MHz. As part of symbol timing recovery in our receiver 10', the baseband input signal is delayed by a fraction of a sample. This fractional delay is used in the final timestamp correction to the index of the first path and is to a resolution of 499.2 x 32 MHz. As is known, the RMARKER is a defined point in the received PHY header. When the RMARKER is detected, we capture the raw timestamp. This is a 40-bit number with a resolution of 499.2/4 MHz. All component timestamps are then combined, *i.e.,* either added or subtracted, after scaling to the same resolution, resulting in a 40-bit timestamp with a resolution of 499.2MHz x 128 (15.65 pico-seconds).

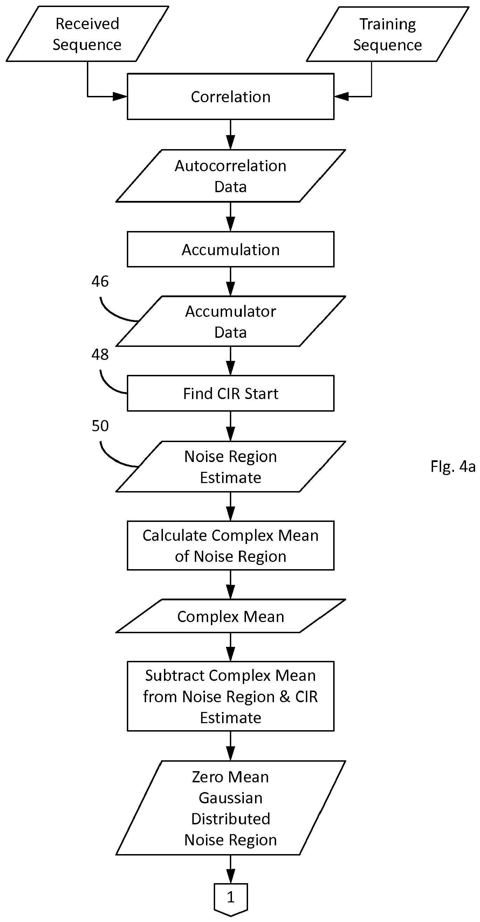

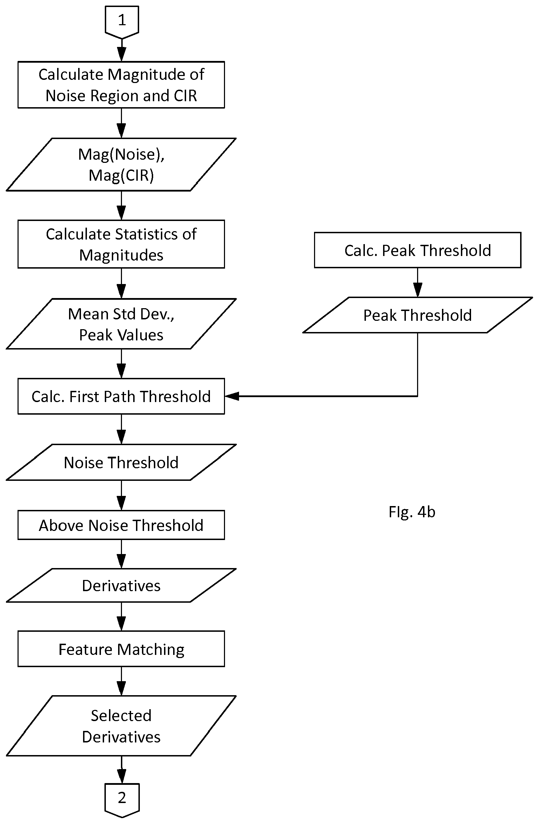

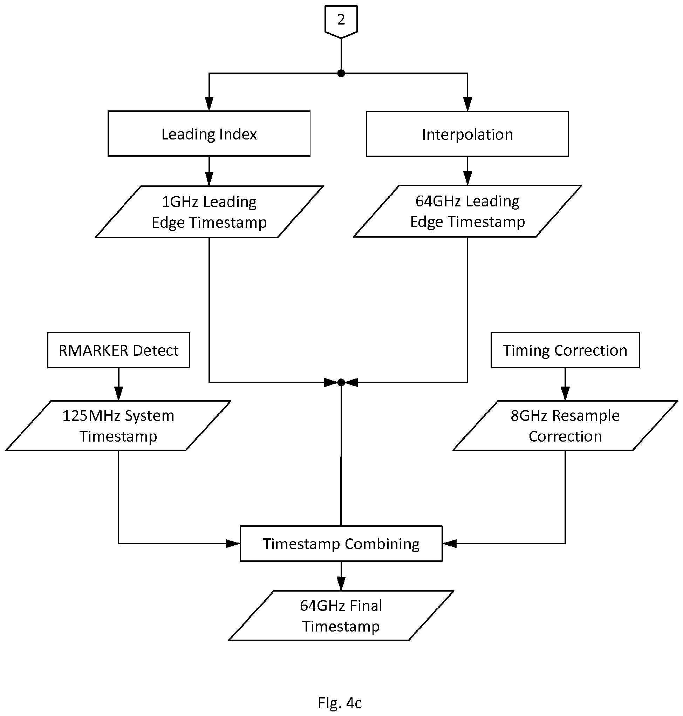

Shown in Fig. 4 by way of example is one method of determining the first path of a received signal in accordance with our invention.

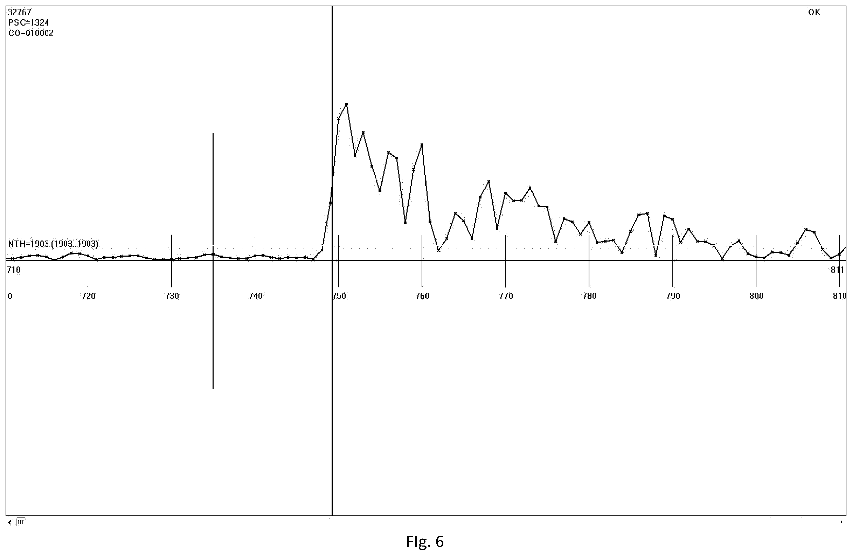

Fig. 5 illustrates, as a waveform, an example of calculating a first path index using the method described above and shown if Fig. 4. Fig. 6 illustrates, as a waveform, a zoomed view of Fig. 5, beginning at approximately index 710 and ending at approximately index 810.

Although we have described our invention in the context of two alternative embodiments, one of ordinary skill in this art will readily realize that many modifications may be made in such embodiments to adapt either to specific implementations. By way of example, it will take but little effort to adapt our invention to feature match against regular shapes other than an isoceles triangle, *e.g., a parabola,* a Gaussian function or a derivative of a Gaussian function. Further, the several elements described above may be implemented using any of the various known semiconductor manufacturing methodologies, and, in general, be adapted so as to be operable under either hardware or software control or some combination thereof, as is known in this art.

Thus it is apparent that we have provided an improved method and apparatus for use in the receiver of a UWB communication system to determine the first path. In particular, we submit that our method and apparatus provides performance generally comparable to the best prior art techniques while requiring less circuitry and consuming less power than known implementations of such prior art techniques. Therefore, we intend that our invention encompass all such variations and modifications as fall within the scope of the appended claims.

## Claims

1. A method for use in an ultra-wideband, UWB, communication system in which multi-symbol packets are transmitted via a transmission channel, the method comprising the steps of:

   [1] developing an estimate comprising a first set of coefficients of a channel impulse response, CIR, of said transmission channel;
   [2] selecting a second set of said coefficients comprising a minimum energy noise region preceding a leading edge of said CIR;
   [3] calculating a standard deviation of said second set of coefficients;
   [4] calculating a first path threshold based on said calculated standard deviation and a highest value coefficient in the second set of coefficients; and
   [5] selecting a first window of coefficients within said first set of coefficients, the window of coefficients surrounding a first one of said first set of coefficients having a value above said first path threshold; and

   utilizing the first window surrounding the first path to distinguish multi-symbol packets that have travelled along the first path from those that have travelled along other paths.

2. The method of claim 1 further comprising the steps of:

   [6] estimating a slope using the first window of coefficients and performing interpolation to estimate the peak of the slope by developing a peak of a selected shape as a function of a selected set of coefficients derived from said first window of coefficients; and
   [7] selecting as a first path said peak.

3. The method of claim 2 wherein, in step [6], said shape comprises a selected one of: an isosceles triangle; a parabola; a Gaussian function; and a derivative of a Gaussian function.

4. The method of claim 2 wherein step [6] is further characterized as comprising the steps of:

   [6.1] calculating a set of differences between each pair of consecutive coefficients comprising said first window of coefficients; and
   [6.2] developing the peak of the selected shape as a function of a selected set of said differences.

5. The method of claim 2 wherein step [6] is further characterized as developing the peak of the selected shape as a derivative of a function of a selected set of the coefficients comprising said first window of coefficients.

6. The method of claim 1 wherein step [2] is further characterized as comprising the steps of:

   [2.1] calculating a mean of said first set of coefficients;
   [2.2] selecting the second set of said coefficients comprising a minimum energy noise region preceding a leading edge of said CIR based on the mean and the standard deviation.

7. Apparatus configured to carry out the steps of the method according to any preceding claim.

8. A non-transient computer readable medium including executable instructions which, when executed by a computer, cause the computer to carry out the steps of the method according to any one of claims 1 to 6.

## Patentansprüche

1. Verfahren zur Verwendung in einem Ultrabreitband-(UBB) Kommunikationssystem, bei dem Mehrsymbolpakete über einen Übertragungskanal übertragen werden, wobei das Verfahren folgende Schritte umfasst:

   [1] Entwickeln einer Schätzung, die einen ersten Satz von Koeffizienten einer Kanalimpulsantwort (Channel Impulse Response, CIR) des genannten Übertragungskanals umfasst;
   [2] Auswählen eines zweiten Satzes der genannten Koeffizienten, der einen minimalen Energierauschbereich umfasst, der einer Vorderkante der genannten CIR vorangeht;

[3] Berechnen einer Standardabweichung des genannten zweiten Satzes von Koeffizienten;

[4] Berechnen einer ersten Pfadschwelle basierend auf der genannten berechneten Standardabweichung und einem Koeffizienten mit dem höchsten Wert in dem zweiten Satz von Koeffizienten; und

[5] Auswählen eines ersten Fensters von Koeffizienten innerhalb des genannten ersten Satzes von Koeffizienten, wobei das Fenster von Koeffizienten einen ersten des genannten ersten Satzes von Koeffizienten umgibt, der einen Wert über der genannten ersten Pfadschwelle hat; und

Verwenden des ersten Fensters, das den ersten Pfad umgibt, um Mehrsymbolpakete, die entlang des ersten Pfads gewandert sind, von denjenigen zu unterscheiden, die entlang anderer Pfade gewandert sind.

2. Verfahren nach Anspruch 1, das ferner folgende Schritte umfasst:

[6] Schätzen einer Steigung unter Verwendung des ersten Fensters von Koeffizienten und Durchführen einer Interpolation, um den Spitzenwert der Steigung durch Entwickeln eines Spitzenwertes einer ausgewählten Form als Funktion eines ausgewählten Satzes von Koeffizienten zu schätzen, der von dem genannten ersten Fenster von Koeffizienten abgeleitet wird; und

[7] Auswählen des genannten Spitzenwertes als ersten Pfad.

3. Verfahren nach Anspruch 2, wobei in Schritt [6] die genannte Form ein ausgewähltes von Folgendem aufweist: ein gleichschenkliges Dreieck; eine Parabel; eine Gaußsche Funktion oder eine Ableitung einer Gaußschen Funktion.

4. Verfahren nach Anspruch 2, wobei Schritt [6] ferner **dadurch gekennzeichnet ist, dass** er folgende Schritte umfasst:

[6.1] Berechnen eines Satzes von Differenzen zwischen jedem Paar aufeinanderfolgender Koeffizienten, die das genannte erste Fenster von Koeffizienten umfassen; und

[6.2] Entwickeln des Spitzenwertes der ausgewählten Form als Funktion eines ausgewählten Satzes der genannten Unterschiede.

5. Verfahren nach Anspruch 2, wobei der Schritt [6] ferner **dadurch gekennzeichnet ist, dass** der Spitzenwert der ausgewählten Form als Ableitung einer Funktion eines ausgewählten Satzes der Koeffizienten entwickelt wird, die das genannte erste Fenster der Koeffizienten umfassen.

6. Verfahren nach Anspruch 1, wobei Schritt [2] ferner **dadurch gekennzeichnet ist, dass** er folgende Schritte umfasst:

[2.1] Berechnen eines Mittelwerts des genannten ersten Satzes von Koeffizienten;

[2.2] Auswählen des zweiten Satzes der genannten Koeffizienten, der einen minimalen Energierauschbereich umfasst, der einer Vorderkante der genannten CIR vorangeht, basierend auf dem Mittelwert und der Standardabweichung.

7. Vorrichtung, die zur Durchführung der Schritte des Verfahrens nach einem der vorhergehenden Ansprüche konfiguriert ist.

8. Nicht-transientes computerlesbares Medium mit ausführbaren Anweisungen, die, wenn sie von einem Computer ausgeführt werden, den Computer dazu veranlassen, die Schritte des Verfahrens nach einem der Ansprüche 1 bis 6 auszuführen.

**Revendications**

1. Procédé destiné à être utilisé dans un système de communication à bande ultra large, UWB, dans lequel des paquets à symboles multiples sont transmis par l'intermédiaire d'un canal de transmission, le procédé comprenant les étapes de:

[1] développement d'une estimation comprenant un premier ensemble de coefficients d'une réponse impulsionnelle de canal, CIR, dudit canal de transmission;

[2] la sélection d'un seconds ensemble desdits coefficients comprenant une région de bruit énergétique minimum précédant un bord avant de ladite CIR;

[3] le calcul d'un écart type dudit second ensemble de coefficients;

[4] le calcul d'un premier seuil de chemin en fonction dudit écart type calculé et d'un coefficient de valeur la plus haute dans le second ensemble de coefficients ; et

[5] la sélection d'une première fenêtre de coefficients dans ledit premier ensemble de coefficients, la fenêtre de coefficients entourant un premier coefficient dudit premier ensemble de coefficients ayant une valeur supérieure audit premier seuil de chemin; et

l'utilisation de la première fenêtre entourant le premier chemin pour différencier des paquets à symboles multiples qui se sont propagés le long du premier chemin des paquets qui se dont propagés le long d'autres chemins.

2. Procédé selon la revendication 1 comprenant en outre les étapes suivantes:

[6] estimation d'une pente en utilisant la première fenêtre de coefficients et exécution d'une interpolation pour estimer la crête de la pente en développant une crête d'une forme sélectionnée en fonction d'un ensemble sélectionné de coefficients dérivé de ladite première fenêtre de coefficients; et

[7] sélection de ladite crête en tant que premier chemin.

3. Procédé selon la revendication 2 dans lequel, à l'étape [6] ladite forme comprend au choix: un triangle isocèle; une parabole; une fonction gaussienne; et une dérivée d'une fonction gaussienne.

4. Procédé selon la revendication 2 dans lequel l'étape [6] est **caractérisée en outre en ce qu'**elle comprend les étapes de:

[6.1] calcul d'un ensemble de différences entre chaque paire de coefficients consécutifs comprenant ladite première fenêtre de coefficients; et

[6.2] développement de la crête de la forme sélectionnée en fonction d'un ensemble sélectionné desdites différences.

5. Procédé selon la revendication 2 dans lequel l'étape [6] est **caractérisée** en outre en tant que développement de la crête de la forme sélectionnée comme dérivée d'une fonction d'un ensemble sélectionné des coefficients comprenant ladite première fenêtre de coefficients.

6. Procédé selon la revendication 1 dans lequel l'étape [2] est **caractérisée en outre en ce qu'**elle comprend les étapes de:

[2.1] calcul d'une moyenne dudit première ensemble de coefficients;

[2.2] sélection du second ensemble desdits coefficients comprenant une région minimale de bruit énergétique précédant un bord avant de ladite CIR en fonction de la moyenne et de l'écart type.

7. Appareil configuré pour mettre en oeuvre les étapes du procédé selon l'une quelconque des revendications précédentes.

8. Support non transitoire lisible par ordinateur comportant des instructions exécutables qui, à leur exécution par un ordinateur, amènent l'ordinateur à mettre en oeuvre les étapes du procédé selon l'une quelconque des revendications 1 à 6.

PRIOR ART

16

Channel
Estimator

12

14

Filter

Detector

18

Fig. 1

10

30

CIR Estimate

16'

28

Windowing

12

26

Accumulator

Preamble
Detect

14

Filter

24

Correlator

32

20

ADC

22

Switch

SFD Detect

34

36

CMF

38

De-hop

18'

40

De-spread

10'

42

Viterbi

44

RS Decode

Fig. 2

Idle

Bring up analog FE

Preamble Detect

Preamble? — No

Yes

SFD Detect

SFD? — No

Yes

PHR

No — PHR OK?

Yes

Data

Done?

Yes — No

Fig. 3

Fig. 4a

```
      ┌─────┐
      │  1  │
      └──┬──┘
         │
         ▼
┌──────────────────────┐
│ Calculate Magnitude of│
│  Noise Region and CIR │
└──────────┬───────────┘
           │
           ▼
   ╱──────────────╲
  ╱  Mag(Noise),   ╲
 ╱    Mag(CIR)      ╲
 ╲──────────────────╱
           │
           ▼
┌──────────────────────┐
│ Calculate Statistics of│          ┌──────────────────────┐
│      Magnitudes       │          │  Calc. Peak Threshold │
└──────────┬───────────┘          └──────────┬───────────┘
           │                                 │
           ▼                                 ▼
   ╱──────────────╲                  ╱──────────────╲
  ╱ Mean Std Dev., ╲                ╱ Peak Threshold ╲
 ╱   Peak Values    ╲               ╲────────────────╱
 ╲──────────────────╱                       │
           │                                │
           ▼                                │
┌──────────────────────┐◄──────────────────┘
│ Calc. First Path      │
│     Threshold         │
└──────────┬───────────┘
           │
           ▼
   ╱──────────────╲
  ╱ Noise Threshold╲
  ╲────────────────╱
           │
           ▼
┌──────────────────────┐
│ Above Noise Threshold │
└──────────┬───────────┘
           │
           ▼
   ╱──────────────╲
  ╱   Derivatives   ╲
  ╲────────────────╱
           │
           ▼
┌──────────────────────┐
│   Feature Matching    │
└──────────┬───────────┘
           │
           ▼
   ╱──────────────╲
  ╱    Selected     ╲
 ╱   Derivatives     ╲
 ╲──────────────────╱
           │
           ▼
      ┌─────┐
      │  2  │
      └─────┘
```

Fig. 4b

15

2

Leading Index

Interpolation

1GHz Leading
Edge Timestamp

64GHz Leading
Edge Timestamp

RMARKER Detect

Timing Correction

125MHz System
Timestamp

8GHz Resample
Correction

Timestamp Combining

64GHz Final
Timestamp

Flg. 4c

Fig. 5

32767
PSC=1324
CO=010002

OK

NTH=1903 (1903..1903)

710

811

0   720   730   740   750   760   770   780   790   800   810

Fig. 6

Fig. 7

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 14290956 B
- US 13775282 B
- US 8760334 B
- US 13033098 B
- US 8436758 B
- US 61316299 B
- US 12885517 B
- US 8437432 B
- US 62037020 B
- GB 2014052677 W
- US 7349461 B
- WO 2009143559 A1

**Non-patent literature cited in the description**

- The ParthusCeva Ultra Wideband PHY Proposal. *IEEE P802.15 Working Group for Wireless Personal Area Networks,* March 2003
- **F. AMOROSO.** Adaptive A/D Converter to Suppress CW Interference in DSPN Spread-Spectrum Communications. *IEEE Trans. on Communications,* October 1983, vol. COM-31 (10), 1117-1123
- Threshold-Based TOA Estimation for Impulse Radio UWB Systems. **SAHINOGLU Z et al.** ULTRA-WIDE-BAND. IEEE, 2005
- A Visit to Computation Centers in the Soviet Union. *Comm. of the ACM,* 1959, 8-20
- Soviet Computer Technology - 1959. *Comm. of the ACM,* 1960, 131-166